Europäisches Patentamt

European Patent Office

Office européen des brevets

(19)

(11) Numéro de publication : **0 057 622**
**B1**

(12) **FASCICULE DE BREVET EUROPÉEN**

(45) Date de publication du fascicule du brevet :
28.11.84

(51) Int. Cl.³ : **B 66 D 3/02// F16G11/04**

(21) Numéro de dépôt : 82400061.6

(22) Date de dépôt : 14.01.82

(54) **Treuil linéaire hydraulique comportant une paire de mâchoires auto-serreuses assurant alternativement le serrage du câble axial portant la charge.**

(30) Priorité : 19.01.81 FR 8100891

(43) Date de publication de la demande :
11.08.82 Bulletin 82/32

(45) Mention de la délivrance du brevet :
28.11.84 Bulletin 84/48

(84) Etats contractants désignés :
AT BE CH DE GB IT LI LU NL SE

(56) Documents cités :
CH-A- 568 870
DE-A- 2 647 400
FR-A- 436 408
FR-A- 639 092
FR-A- 1 394 809
FR-A- 2 248 115
FR-A- 2 348 405
US-A- 1 581 458
US-A- 2 581 052
US-A- 2 933 275
US-A- 3 762 512

(73) Titulaire : KLEY-FRANCE, Société Anonyme dite:
74, Avenue Pablo Picasso
F-92000 Nanterre (FR)

(72) Inventeur : Brieuc, Robert
26, rue Zilina
F-92000 Nanterre (FR)

(74) Mandataire : Roger-Petit, Jean-Camille et al
OFFICE BLETRY 2, Boulevard de Strasbourg
F-75010 Paris (FR)

## Description

Le brevet DE-A-2 647 400 décrit un tel treuil linéaire hydraulique comportant un bâti sur lequel sont fixés symétriquement deux vérins hydrauliques à double effet, encadrant une paire de mâchoires auto-serreuses susceptibles de bloquer à tour de rôle le câble axial à l'extrémité duquel est fixée la charge, ces deux mâchoires auto-serreuses étant alignées sur l'axe de symétrie du treuil, l'une étant solidaire en translation, le long dudit axe du treuil, des cylindres de ces vérins hydrauliques à double effet, et l'autre de leurs pistons, lesdites mâchoires de serrage étant constituées toutes deux par des coins de serrage de câble comportant des cyclindres intercalés entre les faces obliques correspondantes de leurs éléments extérieurs et intérieurs.

Un inconvénient de ces treuils linéaires hydrauliques réside en ce que, si les charges qu'ils doivent supporter sont importantes, le nombre des cylindres intercalés entre les faces obliques de leurs coins de serrage, et le diamètre de ces cylindres, doivent être tels qu'ils deviennent encombrants, ce qui peut limiter leurs possibilités d'utilisation.

Pour pallier cet inconvénient, la présente invention a pour objet un treuil linéaire hydraulique du type précité caractérisé en ce que ses cylindres sont tronqués par deux plans parallèles, symétriques par rapport à leurs axes et perpendiculaires aux faces obliques de leurs coins de serrage.

Si ces cylindres sont suffisamment rapprochés, leur nombre peut être le double pour occuper le même espace, ou l'espace occupé peut être diminué de près de moitié pour un même nombre de cylindres.

On connaît depuis longtemps de tels coins de serrage puisque le brevet US-A 1 581 458 délivré le 20 avril 1926 en montre déjà l'utilisation comme frein de sécurité pour cabines d'ascenseurs mais nul n'avait songé jusqu'à présent aux avantages qu'ils pouvaient permettre d'obtenir dans un treuil linéaire hydraulique comportant une paire de mâchoires auto-serreuses assurant alternativement le serrage du câble axial portant la charge.

Le dessin annexé montre à titre d'exemple un mode de réalisation d'un tel treuil linéaire hydraulique.

La figure 1 est une vue d'un coin de serrage classique.

La figure 2 est une vue du même coin de serrage de câble à cylindres tronqués.

Les figures 3 et 4 sont des vues de face d'un treuil linéaire hydraulique utilisant de tels coins de serrage dans les deux positions extrêmes qu'il peut occuper.

La figure 5 est une vue de dessus, partie en coupe, de ce treuil.

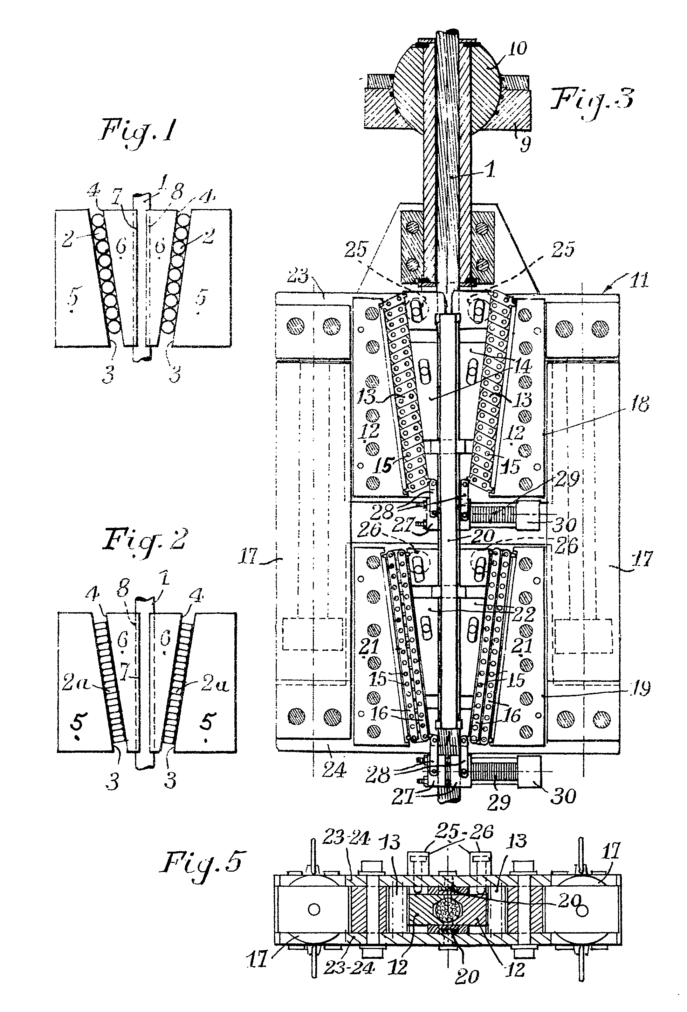

Le coin de serrage du câble 1 montré à la figure 1 comporte des cylindres à axes parallèles 2 intercalés entre les faces obliques 3 de ses éléments fixes 5, et 4 de ses éléments mobiles 6, dans les faces internes 7 desquelles sont creusées des gorges 8 dans lesquelles peut coulisser ou être bloqué le câble 1 ; on conçoit que, lorsque les éléments mobiles 6 du coin de serrage sont sollicités vers le bas de la figure, ils transmettent une pression aux éléments fixes 5, par l'intermédiaire de leurs faces obliques 3 et 4, et des cylindres à axes parallèles interposés 2, qui provoquent un serrage des gorges 8 de leurs faces internes 7 sur le câble 1 qui s'y trouve bloqué.

Dans le mode de réalisation représenté à la figure 2, ces cylindres 2 ont été remplacés par des cylindres 2a dont chacun d'eux est tronqué par deux plans parallèles à son axe, perpendiculaires aux surfaces obliques 3 et 4, et symétriques par rapport à celui-ci ; la largeur de ces cylindres tronqués est d'environ moitié du diamètre des cylindres 2 du coin classique montré à la figure 1, ce qui permet, pour une même surface d'appui et, par conséquent, pour la transmission du même effort, d'en diminuer la longueur de moitié, ou, éventuellement, d'en diminuer le nombre de moitié.

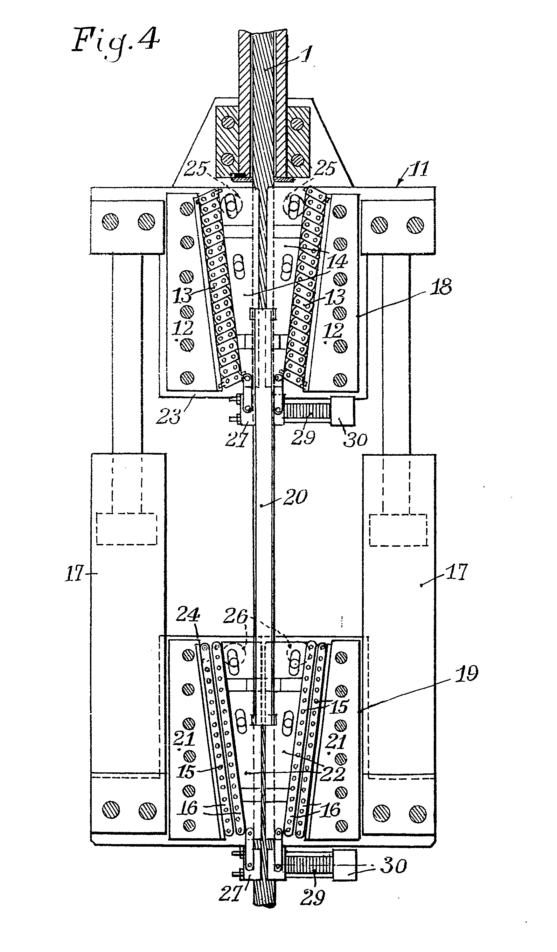

Le vérin linéaire hydraulique montré aux figures 3 à 5 comporte de tels coins de serrage du câble 1, alignés l'un au-dessus de l'autre ; il est suspendu à une poutre 9 par l'intermédiaire d'une rotule 10, et il comporte un bâti fixe 11, sur lequel sont fixés les éléments extérieurs fixes 12 du coin de serrage supérieur, comportant des cylindres tronqués 13 entre les faces obliques parallèles de ses éléments fixes 12 et de ses éléments intérieurs mobiles 14. Ces cylindres tronqués 13, lors du déplacement relatif des éléments du coin de serrage, sont rendus solidaires par des paires de tétons 15, engagés dans des trous correspondants de barrettes 16, parallèles aux faces d'appui obliques des éléments extérieurs 12 et intérieurs 14 du coin de serrage.

Deux vérins hydrauliques à double effet 17, disposés parallèlement au câble 1, de part et d'autre de celui-ci et des deux coins de serrage alignés 18 et 19, permettent d'éloigner ou de rapprocher l'un de l'autre ces deux coins de serrage, l'un d'eux étant solidaire en translation de leurs cylindres et l'autre de leurs pistons.

Des moyens sont en outre prévus tels que, pour la montée de la charge, correspondant au raccourcissement des vérins, le coin de serrage inférieur 19 soit bloqué sur le câble 1 et le coin de serrage supérieur 18 relâché, lors du rapprochement l'un de l'autre des deux coins de serrage, et inversement, tandis que, pour la descente de la charge, correspondant à l'allongement des vérins, le coin de serrage inférieur 19 est bloqué sur le câble et le coin de serrage supérieur 18 relâché, et inversement.

A cet effet, suivant un mode de réalisation de l'invention deux plats de friction 20 sont intercalés symétriquement, de part et d'autre du câble 1, entre les faces latérales des éléments intérieurs mobiles 14 et 22 des coins de serrage supérieur 18 et inférieur 19, et les flasques 23 et 24 de ces coins de serrage ; ces plats de friction 20 sont serrés élastiquement contre lesdites faces latérales par des ressorts.

En supposant que le treuil soit dans la position représentée à la figure 3 et que le coin de serrage inférieure 19 soit bloqué sur le câble 1 et le coin de serrage supérieur 18 relâché, si on agit sur les vérins à double effet 17 pour provoquer leur allongement et, par conséquent, pour éloigner le coin de serrage inférieur 19 du coin de serrage supérieur 18, les éléments extérieurs 21 du coin de serrage inférieur 19 sont poussés vers le bas, ce qui a pour effet de provoquer son desserrage ; simultanément, les plats de friction 20 sont entraînés vers le bas par les éléments intérieurs 22 du coin de serrage inférieur 19 et entraînent par conséquent vers le bas les éléments intérieurs 14 du coin de serrage supérieur 18 qui se bloquent sur le câble 1.

Le coin de serrage inférieur 19 peut donc s'éloigner librement du coin de serrage supérieur 18 ; ce dernier, coincé sur le câble 1, maintient celui-ci fixé, et la charge qui lui est suspendue au niveau précédemment atteint, jusqu'à ce que le coin de serrage inférieur 19 arrive dans sa position extrême correspondant à l'allongement maximal des vérins à double effet 17 représentée à la figure 4.

Si, à ce moment, le coin de serrage supérieur 18 étant bloqué sur le câble 1 et le coin de serrage inférieur 19 étant relâché, on fait fonctionner les vérins à double effet 17 en sens inverse, de façon à les raccourcir, et par conséquent à rapprocher le coin de serrage inférieur 19 du coin de serrage supérieur 18, les éléments extérieurs 21 du coin de serrage inférieur 19 sont tirés vers le haut et exercent une pression sur les éléments intérieurs 22 dudit coin de serrage inférieur 19 qui se bloquent sur le câble 1 ; simultanément, la remontée des éléments intérieurs 22 du coin de serrage inférieur 19 provoque, par l'intermédiaire des plats de friction 20, une poussée vers le haut sur les éléments intérieurs 14 du coin de serrage supérieur 18 qui se trouve débloqué.

Le câble 1 peut donc coulisser librement dans le coin de serrage supérieur 18, et le coin de serrage inférieur 19, tiré vers le haut par les deux vérins à double effet 17, entraîne le câble 1 sur lequel il est bloqué, ainsi que la charge suspendue à ce câble, et ce jusqu'à ce qu'il atteigne la position initiale représentée à la figure 3 ; ce cycle peut alors reprendre autant de fois que nécessaire pour soulever petit-à-petit la charge, chaque fois d'une hauteur correspondant à l'allongement maximal des vérins à double effet, jusqu'à ce qu'elle ait atteint le niveau désiré.

Le treuil linéaire hydraulique représenté comporte en outre des vérins hydrauliques de blocage 25 et 26 qui permettent de bloquer en position inactive les éléments intérieurs mobiles 14 et 22 des coins de serrage supérieur 18 et inférieur 19. Ils sont utilisés, comme il sera expliqué ci-dessous lors de la descente de la charge et leur action, synchronisée avec les déplacements alternatifs des pistons des vérins à double effet, peut être commandée par circuits électriques non représentés que peuvent ouvrir ou fermer automatiquement les pistons des vérins à double effet, lors de leurs déplacements alternatifs.

La manœuvre de descente de la charge peut par exemple être réalisée comme suit :

Le treuil étant par exemple dans la dernière position atteinte lors de la montée de la charge, représentée à la figure 3, le coin de serrage inférieur 19 bloqué sur le câble 1 et le coin de serrage supérieur 18 desserré, si on désire descendre la charge, on bloque d'abord les éléments intérieurs 14 du coin de serrage supérieur 18 en position desserrée, au moyen des vérins de blocage correspondant 25.

On fait ensuite fonctionner les vérins à double effet 17 en vue de les allonger ; le coin de serrage inférieur 19 entraîne vers le bas le câble 1 sur lequel il est bloqué, et la charge suspendue à ce câble, ledit câble coulissant librement dans le coin de serrage supérieur 18 bloqué en position desserrée par les vérins de blocage 25.

Peu avant que le coin de serrage inférieur 19 atteigne sa position basse de fin de course, montrée à la figure 4, on libère par les vérins de blocage 25 des éléments intérieurs 14 du coin de serrage supérieur 18, qui sont aussitôt entraînés vers le bas par ceux 22 du coin de serrage inférieur 19 et les plats de friction 20 ; la descente de la charge est d'abord ralentie ; le coin de serrage supérieur 18 se bloque ensuite sur le câble 1 et les plats de friction 20 provoquent le soulèvement des éléments intérieurs 22 du coin de serrage inférieur 19 qui se desserre.

On bloque alors ces éléments intérieurs 22 du coin de serrage inférieur 19 en position desserrée au moyen des vérins de blocage correspondant 26.

Si on inverse alors le sens de fonctionnement des vérins à double effet 17 en vue de les raccourcir, le coin de serrage inférieur 19 monte librement en coulissant sur le câble 1, puisqu'il est bloqué en position desserrée, et le coin de serrage supérieur 18, qui est en position de serrage, maintient au niveau précédemment atteint le câble 1 et la charge qu'il porte ; le frottement des plats de friction 20 sur les éléments intérieurs 14 du coin de serrage supérieur 18 est évidemment insuffisant pour les soulever et desserrer le coin de serrage supérieur 18.

Peu avant que le coin de serrage inférieur 19 atteigne sa position haute de fin de course, comme le montre la figure 3, on libère par les vérins de blocage 26 les éléments intérieurs 22 du coin de serrage inférieur 19 ; ils sont aussitôt entraînés vers le bas par les plats de friction 20 ; la montée du coin de serrage inférieur 19 est d'abord ralentie ; le coin de serrage inférieur 19 se bloque ensuite sur le câble 1 qu'il maintient, avec la charge qu'il porte, au niveau inférieur précédemment atteint.

Les éléments intérieurs 14 du bloc de serrage supérieur 18 avaient tout d'abord été légèrement soulevés, en fin de course vers le haut du coin de serrage inférieur 19, par les plats de friction 20, et avaient aussitôt été bloqués en position desserrée par le vérin de blocage correspondant 25.

On se trouve donc à nouveau en position initiale et un nouveau cycle peut recommencer pour faire descendre petit à petit la charge jusqu'au niveau inférieur désiré, chaque fois d'une longueur correspondant à l'allongement maximal des vérins à double effet 17.

Un dispositif de sécurité peut être prévu pour chacun des deux coins de serrage, supérieur 18 et inférieur 19 ; il peut consister en une paire de mâchoires 27, suspendues par des biellettes 28 aux éléments intérieurs mobiles 14 et 22 de ces coins de serrage, et des ressorts 29, tels qu'un empilage de rondelles de Belleville, tendant à serrer les deux mâchoires sur le câble 1. Ce dispositif de sécurité offre en outre l'avantage de compléter l'action des plats de friction pour réaliser en temps opportun le coulissement vers le bas ou vers le haut et, par conséquent, le blocage ou le déblocage des éléments intérieurs 14 et 22 des coins supérieurs et/ou inférieurs.

Des vérins hydrauliques 30 permettent de débloquer ces mâchoires 27 lorsque les éléments intérieurs 14 et 22 doivent être maintenus bloqués en position inactive par les vérins de blocage 25 et 26 ; ces vérins 30 peuvent donc être commandés directement par les déplacements alternatifs des pistons des vérins à double effet 17 en utilisant les mêmes circuits électriques que ceux des vérins hydrauliques 25 et 26.

## Revendications

1. Treuil linéaire hydraulique comportant un bâti (11) sur lequel sont fixés symétriquement deux vérins hydrauliques à double effet (17), encadrant une paire de mâchoires auto-serreuses susceptibles de bloquer à tour de rôle le câble axial (1) à l'extrémité duquel est fixée la charge, ces deux mâchoires auto-serreuses étant alignées sur l'axe de symétrie du treuil, l'une étant solidaire en translation, le long dudit axe du treuil, des cylindres de ces vérins hydrauliques à double effet, et l'autre de leurs pistons, lesdites mâchoires auto-serreuses étant constituées de coins de serrage de câble comportant des cylindres (2a) intercalés entre les faces obliques (3, 4) correspondantes de leurs éléments extérieurs et intérieurs (5, 6), caractérisé en ce que ces cylindres (2a) sont tronqués par deux plans parallèles, symétriques par rapport à leurs axes, et perpendiculaires auxdites faces obliques (3) et (4) et en ce que ces cylindres sont suffisamment rapprochés les uns des autres pour que leur nombre puisse être près du double de celui des cylindres qui occuperaient le même espace s'ils n'étaient pas tronqués.

2. Treuil suivant la revendication 1, caractérisé en ce que des plats de friction (20) sont serrés élastiquement entre les faces latérales des éléments intérieurs mobiles (14 et 22) des coins de serrage supérieur (18) et inférieur (19), et les flasques (23 et 24) de ces coins de serrage, de façon à commander le coulissement dans un sens ou dans l'autre des uns (14 ou 22) par les autres (22 ou 14).

3. Treuil suivant la revendication 2, caractérisé en ce que des vérins hydrauliques de blocage (25 et 26) permettent de bloquer à volonté les éléments intérieurs (14 et 22) des coins de serrage (18 et 19) en position inactive.

4. Treuil suivant la revendication 3, caractérisé en ce que le fonctionnement en temps opportun des vérins hydrauliques de blocage (25 et 26) est commandé automatiquement par les coulissements des pistons des vérins hydrauliques (17) dans leurs cylindres au cours du fonctionnement du treuil.

5. Treuil suivant la revendication 1, caractérisé en ce que chacun de ses deux coins de serrage alignés (18 et 19) est muni à sa partie inférieure d'une paire de mâchoires (27) que des ressorts (29) tendent constamment à serrer sur le câble (1) passant entre elles, et que ces mâchoires (27) sont reliées par des biellettes (28) aux éléments intérieurs mobiles (14 et 22) des coins de serrage (18 et 19).

6. Treuil suivant la revendication 5, caractérisé en ce que des vérins hydrauliques (30) permettent de bloquer en position inactive ces mâchoires (27).

7. Treuil suivant les revendications 4 ou 6, caractérisé en ce que le fonctionnement des vérins hydrauliques (30) est commandé avec celui des vérins de blocage (25 et 26) par les déplacements de pistons des vérins à double effet (17) dans leurs cylindres.

## Claims

1. Linear hydraulic hoist comprising a frame (11) to which are symmetrically fixed two double acting hydraulic jacks (17), enclosing a pair of self-gripping jaws able to in turn lock the axial cable (1) to whose end in fixed the load, said two self-gripping jaws being aligned with the axis of symmetry of the hoist, one being integral in translation along said hoist axis with cylinders of the double acting jacks and the other with the pistons thereof, characterized in that the self-gripping jaws are constituted by cable tightening wedges having cylinders (2a) inserted between the corresponding oblique faces (3, 4) of their external and internal elements (5, 6), that the cylinders (2a) are truncated by two parallel planes symmetrical with respect to their axes and perpendicular to said oblique faces (3) and (4) and that these cylinders are sufficiently close together to enable their number to be close to double that of the cylinders which would occupy the same space if they were not truncated.

2. Hoist according to claim 1, characterized in that friction flats (20) are elastically secured between the lateral faces of the inner movable elements (14, 22) of the upper (18) and lower (19) tightening wedges and the end plates (23, 24) of said tightening wedges, so as to control the sliding in one or other direction of one (14) or (22) with respect to the other (22) or (14).

3. Hoist according to claim 2, characterized in that locking hydraulic jacks (25, 26) make it possible to lock, as required, the inner elements (14, 22) of the tightening wedges (18, 19) in the inactive position.

4. Hoist according to claim 3, characterized in that the operation at the appropriate time of the hydraulic locking jack (25, 26) is automatically controlled by the sliding of the pistons of hydraulic jack (17) in their cylinders during the operation of the hoist.

5. Hoist according to claim 1, characterized in that each of its two aligned tightening wedges (18, 19) is provided in its lower part with a pair of jaws (27) which springs (29) constantly tend to secure to the cable (1) passing between them and that these jaws (17) are connected by links (28) to the movable inner elements (14, 22) of the tightening wedges (18, 19).

6. Hoist according to claim 5, characterized in that hydraulic jacks (30) make it possible to lock jaws (27) in the inactive position.

7. Hoist according to claims 4 or 6, characterized in that the operation of the hydraulic jacks (30) is controlled with that of the locking jacks (25, 26) by displacements of the pistons of double acting jacks (17) in their cylinders.

**Ansprüche**

1. Lineare hydraulische Winde, die ein Gestell (11) aufweist, auf dem zwei doppeltwirkende Arbeitszylinder (17) symmetrisch angebracht sind, die ein Paar selbstschließende Backen einrahmen, die geeignet sind, abwechselnd das axial liegende Kabel (1) festzuklemmen, an dessen Ende die Last befestigt ist, wobei diese beiden selbstschließenden Backen auf die Symmetrieachse der Winde ausgerichtet sind, wobei die eine während der Translationsbewegung entlang besagter Achse der Winde mit den Zylindern dieser doppeltwirkenden Arbeitszylinder und die andere mit deren Kolben zusammenarbeitet, wobei besagte selbstschließende Backen aus Kabelspannkeilen bestehen, die Zylinder (2a) aufweisen, die zwischen den einander gegenüberliegenden schrägen Seiten (3, 4) ihrer äußeren und inneren Teile (5, 6) gelagert sind, dadurch gekennzeichnet, daß diese Zylinder (2a) entlang zweier paralleler, relativ zu deren Achsen symmetrischer und senkrecht auf besagten schrägen Seiten (3, 4) stehender Ebenen abgestumpft sind und daß diese Zylinder ausreichend nach aneinander liegen, so daß ihre Zahl annähernd doppelt so hoch sein kann wie die nichtabgestumpfter Zylinder, die den gleichen Raum füllen.

2. Winde gemäß Anspruch 1, dadurch gekennzeichnet, daß Reibflächen (20) zwischen den Seitenflächen der beweglichen Innenteile (14 und 22) der oberen (18) und unteren (19) Spannkeile und den Flanschen (23, 24) dieser Spannkeile elastisch eingeklemmt sind, so daß sie bei Verschiebung des einen (14 oder 22) in die eine eine oder andere Richtung die Verschiebung des anderen (22 oder 14) bewirken.

3. Winde gemäß Anspruch 2, dadurch gekennzeichnet, daß hydraulische Sperrzylinder (25, 26) die Innenteile (14, 22) der Spannkeile (18, 19) in Ruhestellung beliebig festklemmen.

4. Winde gemäß Anspruch 3, dadurch gekennzeichnet, daß die Arbeit der hydraulischen Sperrzylinder (25, 26) zur richtigen Zeit im Laufe des Betriebs der Winde automatisch durch die Verschiebungen der Kolben der Arbeitszylinder (17) in deren Zylindern gesteuert wird.

5. Winde gemäß Anspruch 1, dadurch gekennzeichnet, daß jedes ihrer zwei ausgerichteten Spannkeile (18, 19) an seinem unteren Teil mit einem Paar Backen (27) versehen ist, die durch Federn (29) ständig auf das Kabel (1) gedrückt werden und daß diese Backen (27) durch Schwingarme (28) mit den beweglichen Innenteilen (14, 22) der Spannkeile (18, 19) verbunden sind.

6. Winde gemäß Anspruch 5, dadurch gekennzeichnet, daß Arbeitszynlinder (30) diese Backen (27) in Ruhestellung festklemmen.

7. Winde gemäß Anspruch 4 oder 6, dadurch gekennzeichnet, daß die Arbeit der Arbeitszylinder (30), so wie die der Sperrzylinder (25, 26) durch die Verschiebungen der Kolben der doppeltwirkenden Zylinder (17) in deren Zylindern gesteuert wird.

Fig.1

Fig.2

Fig.3

Fig.5

Fig.4